Europäisches Patentamt

European Patent Office

Office européen des brevets

(11) Veröffentlichungsnummer: **0 384 233 A2**

# (12) EUROPÄISCHE PATENTANMELDUNG

(21) Anmeldenummer: 90102532.0

(22) Anmeldetag: 09.02.90

(51) Int. Cl.5: **C08L 75/04, C08L 25/16,** **//(C08L75/04,33:20,51:04)**

Ein Antrag gemäss Regel 88 EPÜ auf Berichtigung von Anspruch 2 liegt vor. Über diesen Antrag wird im Laufe des Verfahrens vor der Prüfungsabteilung eine Entscheidung getroffen werden (Richtlinien für die Prüfung im EPA, A-V, 2.2).

(30) Priorität: 18.02.89 DE 3905008

(43) Veröffentlichungstag der Anmeldung:
29.08.90 Patentblatt 90/35

(84) Benannte Vertragsstaaten:
BE DE FR GB IT NL

(71) Anmelder: BASF Aktiengesellschaft
Carl-Bosch-Strasse 38
D-6700 Ludwigshafen(DE)

(72) Erfinder: Lausberg, Dietrich, Dr.
Nachtigalstrasse 32 a
D-6700 Ludwigshafen(DE)
Erfinder: Steinberger, Rolf, Dr.
Am Moenchhof 77
D-6707 Schifferstadt(DE)
Erfinder: Bittner, Gerhard, Dr.
Lohneufer 36
D-2840 Diepholz 1(DE)
Erfinder: Lukassen, Bernd
Schauenroth 24
D-4504 Georgsmarienhuette(DE)

(54) **Formmasse aus thermoplastischem Polyurethan.**

(57) Thermoplastische Formmasse aus

A: 20 bis 90 Gew.% eines thermoplastischen Polyurethans,

B: 1 bis 40 Gew.% eines kautschukelastischen Pfropfcopolymerisats aus

$b_1$: 50 bis 90 Gew.% einer Pfropfgrundlage aus einem kautschukelastischen Polymeren mit einer Glastemperatur von unter -20°C auf Basis von Butadien oder $C_2$-$C_{10}$-Acrylat und, wenn gewünscht einem Vernetzer und

$b_2$: 10 bis 50 Gew.% einer Pfropfauflage aus Styrol und Acrylnitril im Verhältnis von 85 zu 15 bis 60 zu 40 oder/und Styrol oder/und Methylmethacrylat,
und

C: 5 bis 75 Gew.% eines Copolymerisats aus

$c_1$: 55 bis 90 Gew.% α-Methylstyrol und

$c_2$: 10 bis 45 Gew.% Acrylnitril oder Methacrylnitril oder deren Mischungen,
und

D: bis zu 50 Gew.% verstärkenden Füllstoffen.

EP 0 384 233 A2

EP 0 384 233 A2

## Formmasse aus thermoplastischem Polyurethan

Es ist bekannt, daß thermoplastische Polyurethane (TPU) mit Copolymerisaten aus Styrol, Butadien und Acrylnitril (ABS) abgemischt werden können.

Mischungen aus ABS und TPU werden in den US-PSen 3 049 505 und 4 179 479 beschrieben. Deren ABS-Polymerisate bestehen immer aus Styrol, Acrylnitril und Butadien. Die erhaltenen Formmassen zeigen eine ungenügende Kerbschlagzähigkeit in der Kälte und Unverträglichkeit bei hohen Verarbeitungstemperaturen.

Es wurde nun gefunden, daß beim Austausch von Styrol in Copolymerisaten von Styrol, Acrylnitril und Butadien durch $\alpha$-Methylstyrol die Verträglichkeit von Blends mit TPU drastisch verbessert wird und zu Formmassen mit hervorragender Tieftemperaturkerbschlagzähigkeit führt.

Unmittelbarer Gegenstand der Erfindung ist eine thermoplastische Formmasse aus

A: 20 bis 90 Gew.% eines thermoplastischen Polyurethans A,

B: 1 bis 40 Gew.% eines kautschukelastischen Pfropfcopolymerisats B aus

$b_1$: 50 bis 90 Gew.% einer Pfropfgrundlage $b_1$ aus einem kautschukelastischen Polymeren mit einer Glastemperatur von unter -20°C auf Basis von Butadien oder $C_2$-$C_{10}$-Acrylat und, wenn gewünscht einem Vernetzer und

$b_2$: 10 bis 50 Gew.% einer Pfropfauflage $b_2$ aus Styrol und Acrylnitril im Verhältnis von 85 zu 15 bis 60 zu 40 oder/und Styrol oder/und Methylmethacrylat, und

C: 5 bis 75 Gew.% eines Copolymerisats C aus

$c_1$: 55 bis 90 Gew.% $\alpha$-Methylstyrol ($c_1$) und

$c_2$: 10 bis 45 Gew.% Acrylnitril oder Methacrylnitril ($c_2$) oder deren Mischungen, und

D: bis zu 50 Gew.% verstärkenden Füllstoffen D.

In der Komponente $b_2$) kann Styrol ganz oder teilweise durch $\alpha$-Methylstyrol ersetzt sein. Die Pfropfauflage kann mehrstufig aufgebaut sein.

Außerdem betrifft die Erfindung die Verwendung derartiger Formmassen zur Herstellung von Formkörpern sowie Formkörper, die aus den erfindungsgemäßen Formmassen als wesentlichen Komponenten erhalten werden.

Als Komponente A) enthalten die erfindungsgemäßen Formmassen 20 bis 90, bevorzugt 30 bis 70 Gew.% thermoplastisches Polyurethan.

Die thermoplastischen Polyurethane (Komponente A) sind bekannt. Sie sind im wesentlichen aus langkettigen Polyolen vom Molekulargewicht 400 bis 10.000, Poly-(bevorzugt Di)-isocyanaten und Kettenverlängerungsmitteln (bevorzugt kurzkettigen Polyolen mit einem Molekulargewicht z.B. bis 380) aufgebaut, wobei das Äquivalent-Verhältnis von Isocyanaten zu zerewitinoffaktiven H-Atomen (hier NCO/OH-Verhältnis genannt) vorzugsweise zwischen 0,95 und 1,10, besonders bevorzugt zwischen 0,98 und 1,08 liegt.

Als im wesentlichen lineare Polyole mit Molekulargewichten zwischen 400 und 10.000, bevorzugt zwischen 800 und 6.000, kommen erfindungsgemäß praktisch alle an sich bekannten, vorzugsweise 2, gegebenenfalls - in untergeordneten Mengen - auch 3, zerewitinoffaktive Gruppen (im wesentlichen Hydroxylgruppen) enthaltenden Polyester, Polylactone, Polyether, Polythioether, Polyesteramide, Polycarbonate, Polyacetale, Vinylpolymere wie z.B. Polybutadiendiole, bereits Urethan- oder Harnstoffgruppen enthaltende Polyhydroxylverbindungen, gegebenenfalls modifizierte natürliche Polyole, sowie auch andere zerewitinoffaktive Gruppen wie Amino-, Carboxyl- oder Thiolgruppen enthaltende Verbindungen in Betracht. Diese Verbindungen werden z.B. in den DE-Offenlegungsschriften 23 02 564, 24 213 764 und 25 49 372 (US-Patent 3 963 679) und 24 02 840 (US-Patent 3 984 607) sowie der DE-AS 24 57 387 (US-Patent 4 035 213) eingehend beschrieben. Erfindungsgemäß bevorzugt sind hydroxylgruppenhaltige Polyester aus Glykolen und Adipinsäure, Phthal- und/oder Terephthalsäure sowie deren Hydrierungsprodukte, Polycaprolactone, Polyethylenoxid, Polypropylenoxid, Polytetrahydrofuran und deren Mischpolyether. Besonders bevorzugt sind Polyester aus Glykolen, Adipinsäure und Polytetrahydrofuran.

Erfindungsgemäß zu verwendende Diisocyanate sind die aliphatischen, cycloaliphatischen, aromatischen, araliphatischen und heterocyclischen Diisocyanate, wie sie z.B. in den DE-Offenlegungsschriften 23 02 564, 24 23 764, 25 49 372, 24 02 840 und 24 47 387 beschrieben sind. Erfindungsgemäß bevorzugte Diisocyanate sind gegebenenfalls durch Methylgruppen substituiertes Hexamethylen-diisocyanat, Isophorondiisocyanat, Diphenylmethan-diisocyanat und Naphthylen-1,5-diisocyanat.

Die genannten Diisocyanate können gegebenenfalls zusammen mit bis zu ca. 15 Mol% (bezogen auf Diisocyanat) eines höherfunktionellen Polyisocyanats eingesetzt werden; die Menge des höherfunktionellen

2

Polyisocyanats muß jedoch so begrenzt werden, daß ein noch schmelzbares bzw. thermoplastisches Produkt erhalten wird. Eine größere Menge an höherfunktionellen Isocyanaten muß im allgemeinen durch die Mitverwendung von im Durchschnitt weniger als difunktionellen Hydroxyl- bzw. Aminoverbindungen (bzw. auch von Monoisocyanaten) ausgeglichen werden, so daß eine zu weit gehende chemische Vernetzung des Produktes vermieden wird. Beispiele für höherfunktionelle Isocyanate und monofunktionelle Verbindungen sind ebenfalls dem oben zitierten Stand der Technik zu entnehmen. Beispielsweise seien Monoamine wie Butyl- und Dibutylamin, Octylamin, Stearylamin, N-Methylstearylamin, Pyrrolidon, Piperidin und Cyclohexylamin sowie Monoalkohole wie Butanol, 1-Ethylhexanol, Octanol, Dodecanol, Amylalkohole, Cyclohexanol und Ethylenglykolmonomethylether erwähnt. Die erwähnten monofunktionellen Verbindungen können auch als Regler eingesetzt werden.

Auch die erfindungsgemäß verwendbaren Kettenverlängerungsmittel sind bekannt und z.B. in den DE-Offenlegungsschriften 23 02 564, 24 23 764, 25 49 372, 24 02 799, 24 02 840 und 24 57 387 beschrieben. Es sind dies niedermolekulare Polyalkohole (vorzugsweise Glykole), Polyamine, Hydrazine und Hydrazide. Auch Aminoalkohole wie Ethanolamin, Diethanolamin, N-Methyldiethanolamin, Triethanolamin und 3-Aminopropanol kommen erfindungsgemäß in Frage. Bevorzugte Kettenverlängerungsmittel sind Ethylenglykol, Di- und Triethylenglykol, 1,4-Butandiol, 1,6-Hexandiol und Hydrochinondi-$\beta$-hydroxyethylether. Besonders bevorzugt sind Hydrochinondi-$\beta$-hydroxyethylether, Butandiol-1,4 und Hexandiol-1,6.

Den Polyurethankomponenten können selbstverständlich die üblichen Hydrolyse- und Oxidationsstabilisatoren entsprechend dem Stand der Technik zugesetzt werden.

Es empfiehlt sich auch, zusätzlich zur Stabilisierung des Pfropfkautschuks Antioxidantien wie 2,6-Di-tert.-butyl-4-methylphenol, andere sterisch gehinderte Phenole oder andere übliche Antioxidantien einzeln oder in Mischung in einer Menge von etwa 0,1 bis 1,5 Gew.%, bezogen auf Gesamt blend, zuzugeben. Diese Zusätze können entweder in den Pfropfkautschuk oder das Polyurethan eingebracht werden.

Eine Übersicht über thermoplastische Polyurethane, ihre Eigenschaften und Anwendungen wird z.B. in Kunststoffe 68 (1978), Seiten 819 - 825 oder im Kunststoff-Handbuch, Band 7, Polyurethane, 2. Auflage, herausgegeben von Dr. G. Oertel (Carl Hanser Verlag, München, Wien 1983) gegeben.

Sie können kontinuierlich oder diskontinuierlich nach verschiedenen Verfahren hergestellt werden. Als die bekanntesten werden das sogenannte Bandverfahren und das Extruderverfahren auch technisch genutzt; das Bandverfahren, das bevorzugt wird, wird nachstehend erläutert:

Nach der GB-A 1 057 018 wird aus der Polyhydroxylverbindung und überschüssigem organischen Diisocyanat ein Prepolymeres hergestellt, das über eine Dosierpumpe einem Mischkopf zugeführt und dort mit einer bestimmten Menge eines niedermolekularen Diols gemischt wird. Das erhaltene Reaktionsgemisch wird auf ein Förderband gebracht und durch einen auf 70 bis 130° C erhitzten Ofen geführt, bis es erstarrt. Das Reaktionsprodukt wird danach zerkleinert und bei bis zu 120° C 6 bis 40 Stunden getempert.

Als Komponente B) enthalten die Formmassen 5 bis 40, bevorzugt 10 bis 30 Gew.% eines kautschukelastischen Pfropfcopolymerisats mit Butadien, Butadien/Styrol-, Butadien/Acrylnitril und Acrylestern, wie sie z.B. in den DE-A-16 94 173 und DE-A-23 48 377 beschrieben werden.

Von diesen sind insbesondere die sogenannten ABS-Polymerisate zu nennen, wie sie in den DE-A-20 35 390, DE-A-22 48 242 und der EP-A-22 216 beschrieben werden, wobei letztere besonders bevorzugt sind.

Als Komponente B) können auch Pfropfpolymerisate aus
50 bis 90, bevorzugt 60 bis 80 Gew.% eines Acrylatkautschuks mit einer Glasübergangstemperatur von unter -20° C als Pfropfgrundlage
und
10 bis 50, bevorzugt 20 bis 40 Gew.% eines copolymerisierbaren ethylenisch ungesättigten Monomeren, dessen Homo- bzw. Copolymerisate eine Übergangstemperatur von mehr als 35° C aufweisen, als Pfropfauflage
eingesetzt werden.

Die Pfropfgrundlage sind Acrylat bzw. Methacrylatkautschuke, wobei bis zu 40 Gew.% weiterer Comonomerer enthalten sein können. Die $C_1$-$C_8$-Ester der Acrylsäure bzw. Methacrylsäure sowie deren halogenierte Derivate wie auch aromatische Acrylsäureester und deren Mischungen werden bevorzugt. Als Comonomere in der Pfropfgrundlage seien Acrylnitril, Methacrylnitril, Styrol, $\alpha$-Methylstyrol, Acrylamide, Methacrylamide sowie Vinyl-$C_1$-$C_6$-Alkylether angeführt.

Die Pfropfgrundlage kann unvernetzt oder teilweise oder vollständig vernetzt sein. Die Vernetzung wird durch Copolymerisation von vorzugsweise 0,02 bis 5 Gew.%, insbesondere 0,05 bis 2 Gew.% eines vernetzenden Monomeren mit mehr als einer Doppelbindung erzielt. Geeignete vernetzende Monomere werden z.B. in der DE-A-27 26 256 und der EP-A-50 265 beschrieben.

Bevorzugte vernetzende Monomere sind Triallylcyanurat, Triallylisocyanurat, Triacryloylhexahydro-s-triazin und Trialkylbenzole.

Falls die vernetzenden Monomeren mehr als 2 polymerisierbare Doppelbindungen aufweisen, ist es vorteilhaft, ihre Menge auf nicht mehr als 1 Gew.%, bezogen auf die Pfropfgrundlage, zu beschränken.

Besonders bevorzugte Pfropfgrundlagen sind Emulsionspolymerisate mit einem Gelgehalt von mehr als 60 Gew.% (bestimmt in Dimethylformamid bei 25°C nach M. Hoffmann, H. Krömer, R. Kuhn, Polymeranalytik, Georg-Thieme-Verlag, Stuttgart, 1977).

Ebenfalls geeignet als Pfropfgrundlage sind Acrylat-Kautschuke mit einem Dienkern, wie sie z.B. in der EP-A-50 262 beschrieben werden.

Als Pfropfmonomere eignen sich besonders Styrol, α-Methylstyrol, Acrylnitril, Methacrylnitril und Methylmethacrylat oder deren Mischungen, insbesondere solche aus Styrol und Acrylnitril im Gewichtsverhältnis 90/10 bis 50/50.

Die Pfropfausbeute, d.h. der Quotient aus der Menge des aufgepfropften Monomeren und dar Menge des eingesetzten Pfropfmonomren liegt im allgemeinen im Bereich von 20 bis 80 %.

Kautschuke auf der Basis von Acrylaten, die erfindungsgemäß verwendet werden können, werden z.B. in der DE-A-24 44 584 und der DE-A-27 26 256 beschrieben.

Die Kautschuke auf Butadienbasis weisen vorzugsweise eine Glasübergangstemperatur von unter -40°C, insbesondere von unter -50°C auf, was zu einer guten Schlagzähigkeit auch bei tiefen Temperaturen führt.

Es versteht sich, daß auch Mischungen der vorstehend aufgeführten Kautschuktypen eingesetzt werden.

Die Pfropfauflage kann einstufig, aber auch mehrstufig mit bis zu 4 Stufen aufgebaut sein.

Die Herstellung der Pfropfkautschuke erfolgt in bekannter Weise durch Emulsionspolymerisation.

Als Komponente C) enthalten die erfindungsgemäßen Formmassen 5 bis 75, vorzugsweise 10 bis 60 und insbesondere 10 bis 40 Gew.% eines Copolymerisats aus

$c_1$) 55 bis 90, vorzugsweise 60 bis 90 und insbesondere 75 bis 90 Gew.% α-Methylstyrol und

$c_2$) 10 bis 45, vorzugsweise 10 bis 40 und insbesondere 10 bis 25 Gew.% Acrylnitril und/oder Methacrylnitril.

Derartige Produkte können z.B. nach dem in den DE-AS 10 01 001 und DE-AS 10 03 436 beschriebenen Verfahren hergestellt werden. Auch im Handel sind solche Copolymere erhältlich. Vorzugsweise liegt der durch Lichtstreuung bestimmte Gewichtsmittelwert des Molekulargewichts im Bereich von 50.000 bis 500.000, insbesondere von 70.000 bis 250.000.

Das Gewichtsverhältnis von B : C liegt im Bereich von 1:3 bis 3:1, vorzugsweise von 1:2 bis 2:1 und insbesondere von 1:1,5 bis 1,5:1.

Maximal 50 % des α-Methylstyrols können durch andere unsubstituierte oder substituierte Styrole wie z.B. Styrol oder p-Methylstyrol ersetzt werden.

Als verstärkend wirkende Füllstoffe D seien beispielsweise mineralische Füllstoffe wie z.B. Wollastonit, Talkum, Kaolin oder $SiO_2$, und vorzugsweise Glasfasern genannt, wobei die Glasfasern z.B. in Form von Glasgeweben, -matten, -vliesen und/oder vorzugsweise Glasseidenrovings oder geschnittener Glasseide aus alkaliarmen E-Glasen min einem Durchmesser von 5 bis 200 μm, vorzugsweise 6 bis 15 μm, zur Anwendung gelangen, die nach ihrer Einarbeitung eine mittlere Länge von 0,05 bis 1 mm, vorzugsweise 0,1 bis 0,5 mm, aufweisen.

Andere geeignete Füllstoffe sind z.B. Wollastonit, Calciumcarbonat, Glaskugeln, Quarzmehl, Si- und Bornitrid oder Mischungen dieser Füllstoffe.

Von den vorstehend genannten verstärkenden Füllstoffen haben sich insbesondere Glasfasern als vorteilhaft herausgestellt, besonders dann, wenn eine hohe Wärmeformbeständigkeit oder sehr hohe Steifigkeit gefordert ist.

Der Anteil der Komponente D beträgt 0 bis 60, vorzugsweise 2 bis 50 und insbesondere 5 bis 30 Gew.%, bezogen auf das Gesamtgewicht der Formmassen.

Neben den Komponenten A bis D können die erfindungsgemäßen Formmassen übliche Zusatzstoffe und Verarbeitungshilfsmittel enthalten. Deren Anteil beträgt im allgemeinen bis zu 20, vorzugsweise bis zu 10 Gew.%, bezogen auf das Gesamtgewicht der Komponenten A bis D.

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Färbemittel, wie Farbstoffe und Pigmente, Keimbildungsmittel und Weichmacher.

Oxidationsverzögerer und Wärmestabilisatoren, die den thermoplastischen Massen gemäß der Erfindung zugesetzt werden können, sind z.B. sterisch gehinderte Phenole, Hydrochinone, substituierte Vertreter dieser Gruppe und Mischungen derselben, vorzugsweise in Konzentrationen bis 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2,0 Gew.% eingesetzt werden.

Gleit- und Entformungsmittel, die in der Regel in Mengen bis zu 1 Gew.% der thermoplastischen Masse zugesetzt werden, sind $C_{12}$-$C_{36}$-Fettsäuren, Fettalkohole, Fettsäureester und -amide sowie Montanesterwachse.

Ferner können organische Farbstoffe, wie Nigrosin, Pigmente, z.B. Titandioxid, Cadmiumsulfid, Cadmiumsulfidselenid, Phthalocyanine, Ultramarinblau oder Ruß zugesetzt werden. Keimbildungsmittel, wie Talkum, können in Mengen z.B. bis zu 5 Gew.%, bezogen auf die Komponenten A bis D, angewandt werden.

Die Herstellung der erfindungsgemäßen Formmassen kann nach an sich bekannten Mischverfahren z.B. durch Einarbeiten von Komponente B und C und ggf. D in das TPU bei Temperaturen von 190 bis 250° C, insbesondere 210 bis 240° C in üblichen Mischvorrichtungen, wie Extrudern, Knetern und Mischern erfolgen.

Aus den erfindungsgemäßen Formmassen lassen sich leicht Formkörper mit guter Oberflächenbeschaffenheit und verbesserter Schlagzähigkeit bei hoher Steifigkeit, insbesondere bei tiefen Temperaturen, herstellen. Weder im Formkörper noch in der Schmelze tritt eine Entmischung der Polymerkomponenten ein.

Beispiele

Zur Herstellung von erfindungsgemäßen thermoplastischen Formmassen wurden folgende Ausgangsstoffe eingesetzt (die angegebenen Mengen und Verhältnisse beziehen sich, wie überall in dieser Beschreibung, auf das Gewicht).

A1) Thermoplastisches Polyurethan auf der Grundlage von Butandioladipat (M.G. 2000, bestimmt aus der OH-Zahl, MDI und Butandiol-1,4 mit einem NCO/OH-Verhältnis von 1.00 und einer Shore-D-Härte von 59)

A2) wie A1), aber NCO/OH = 1.04

A3) wie A1), aber Shore 64D

A4) wie A1), aber Shore 90A

A5) wie A1), aber auf Basis eines Butandiol-Ethylenglykol-Adipats mit einem Verhältnis Butandiol-Ethylenglykol 1:1

Alle TPU-Polymerisate A1)-A5) enthalten zusätzlich 1 % Diisopropylphenylcarbodiimid, bezogen auf den Polyesteranteil.

A6) wie A1), aber auf Basis p-THF mit einem Molgewicht von 1.000 g/mol, bestimmt aus der OH-Zahl.

B1) Pfropfkautschuk mit einer Pfropfgrundlage (75 Gew.%) aus Poly-n-Butylacrylat, das mit Butandioldiacrylat umgesetzt wurde und eine Pfropfhülle (25 Gew.%) eines Copolymeren aus Styrol und Acrylnitril (Gew.-Verhältnis 75:25) hergestellt durch Emulsionspolymerisation in an sich bekannter Weise (Mittlere Teilchengröße $d_{50}$ = 450 nm).

Der mittlere Teilchendurchmesser $d_{50}$ ist der Durchmesser, ober- und unterhalb dessen die Durchmesser von jeweils 50 Gew.% der Teilchen liegen.

B2) Pfropfkautschuk mit einer Pfropfgrundlage aus Polybutadien (75 %) und einer Pfropfhülle (25 %) eines Copolymeren aus Styrol und Acrylnitril (Gew.-Verhältnis 75:25) hergestellt durch Emulsionspolymerisation in an sich bekannter Weise. ($d_{50}$ = 250 nm)

B3) Pfropfkautschuk wie B2, aber mit $\alpha$-Methylstyrol statt Styrol.

B4) Propfkautschuk ($d_{50}$ = 240 $\mu$m) mit einer Pfropfgrundlage aus Polybutadien (70 %), einer ersten Hülle aus Styrol (10 %) und einer zweiten Hülle aus Methylmethacrylat, n-Butylacrylat und Glycidylmethacrylat im Verhältnis 89 : 1, hergestellt durch Emulsionspolymerisation.

C1) Styrol-Acrylnitrilcopolymerisat mit einem S/AN-Verhältnis von 65:35 und einer VZ von 80, gemessen 0,5 % in DMF bei 25° C.

C2) wie C1), aber mit einer VZ von 60, gemessen wie bei C1).

C3) $\alpha$-Methylstyrol-acrylnitril-copolymerisat mit einem $\alpha$-MS/AN-Verhältnis von 70:30 und einer VZ von 58, gemessen wie bei C1).

D) E-Glasfaser, Roving oder Schnittfaser, Durchmesser 10 $\mu$m.

Die Formmassen wurden hergestellt, indem die Komponenten intensiv gemischt, in einem Zweischnekkenextruder bei 230° C aufgeschmolzen, homogenisiert und in ein Wasserbad extrudiert wurden. Nach Granulierung und Trocknung wurde die Mischung auf einer Spritzgußmaschine zu Prüfkörpern (MT 230° C) geformt und diese ohne weitere Nachbehandlung untersucht. Bei Verwendung von Glasfasern werden diese in Form von Schnittfasern oder Rovings der homogenisierten Schmelze zugesetzt.

Die Ergebnisse sind den nachfolgenden Tabellen 1 und 2 zu entnehmen.

Die Kerbschlagzähigkeit wurde nach IN 53 453, die Schlagzähigkeit nach DIN 53 453, die Zugfestigkeit nach DIN 53 455 und der Elastizitätsmodul nach DIN 53 457 bestimmt. Als Maß für die Wärmeformbeständigkeit ist die Vicat-B-Temperatur, gemessen nach DIN 53 460, angegeben.

Tabelle 1

| Nr. | Komponente | | | Zug-E-Modul | ak -20°C | ak -30°C |
|---|---|---|---|---|---|---|
| | A | B | C | | | |
| 1* | 60 A1 | 10 B2 | 30 C2 | 650 | 12 | 5 |
| 2* | 60 A1 | 20 B2 | 30 C2 | 550 | 21 | 6 |
| 3* | 60 A3 | 10 B2 | 30 C2 | 900 | 10 | 4 |
| 4 | 60 A1 | 10 B2 | 30 C3 | 650 | 32 | 11 |
| 5 | 60 A1 | 10 B2 | 30 C3 | 550 | 54 | 19 |
| 6 | 60 A3 | 10 B2 | 30 C3 | 900 | 31 | 9 |
| 7 | 60 A2 | 20 B2 | 20 C3 | 540 | 58 | 23 |
| 8 | 60 A4 | 20 B2 | 20 C3 | 420 | o.Br. | 34 |
| 9 | 60 A5 | 20 B2 | 20 C3 | 590 | 48 | 14 |
| 10 | 60 A6 | 20 B2 | 20 C3 | 500 | o.Br. | 39 |
| 11 | 60 A1 | 20 B1 | 20 C3 | 570 | 36 | 5 |
| 12 | 80 A1 | 10 B2 | 10 C3 | 450 | 60 | 35 |
| 13 | 40 A1 | 30 B2 | 30 C3 | 1100 | 28 | 12 |
| 14 | 40 A1 | 20 B4 | 20 C3 | 520 | 42 | 16 |

*) Vergleichsversuch

Tabelle 2

| Nr. | Komponente | | | | Zug-E-Modul | ak -20°C | ak -30°C |
|---|---|---|---|---|---|---|---|
| | A | B | C | D | | | |
| 1* | 48 A1 | 16 B2 | 16 C2 | 20 | 3600 | 14 | 5 |
| 2 | 48 A4 | 16 B2 | 16 C3 | 20 | 3200 | 32 | 11 |
| 3* | 48 A1 | 16 B2 | 16 C3 | 20 | 3600 | 28 | 8 |
| 4 | 48 A3 | 16 B2 | 16 C3 | 20 | 4200 | 18 | 6 |

*) Vergleichsversuch

**Ansprüche**

1. Thermoplastische Formmasse aus

A: 20 bis 90 Gew.% eines thermoplastischen Polyurethans A,

B: 1 bis 40 Gew.% eines kautschukelastischen Pfropfcopolymerisats B aus

$b_1$: 50 bis 90 Gew.% einer Pfropfgrundlage $b_1$ aus einem kautschukelastischen Polymeren mit einer Glastemperatur von unter -20°C auf Basis von Butadien oder $C_2$-$C_{10}$-Acrylat und, wenn gewünscht einem Vernetzer und

$b_2$: 10 bis 50 Gew.% einer Pfropfauflage $b_2$ aus Styrol und Acrylnitril im Verhältnis von 85 zu 15 bis 60 zu 40 oder/und Styrol oder/und Methylmethacrylat,

und

C: 5 bis 75 Gew.% eines Copolymerisats C aus

6

$c_1$: 55 bis 90 Gew.% $\alpha$-Methylstyrol ($c_1$) und

$c_2$: 10 bis 45 Gew.% Acrylnitril oder Methacrylnitril ($c_2$) oder deren Mischungen, und

D: bis zu 50 Gew.% verstärkenden Füllstoffen D.

2. Formmasse nach Anspruch 1, gekennzeichnet durch folgende Zusammensetzung:

30 bis 70 Gew.% Polyurethan A,

10 bis 30 Gew.% Pfropfcopolymerisat $b_1$ aus

60 bis 80 Gew.% Pfropfgrundlage B,

20 bis 40 Gew.% Pfropfauflage $b_2$ und

10 bis 60 Gew.% Copolymerisat C aus

60 bis 90 Gew.% $\alpha$-Methylstyrol $c_1$ und

10 bis 40 Gew.% (Meth)acrylnitril $c_2$.